# EUROPÄISCHE PATENTSCHRIFT

(11) **EP 1 297 309 B1**
(45) Veröffentlichungstag und Bekanntmachung des Hinweises auf die Patenterteilung: **27.09.2006**
(21) Anmeldenummer: 01953798.4
(22) Anmeldetag: 19.06.2001
(51) Int. Cl.: G01C 21/34, H04Q 7/38

(54) **VERFAHREN ZUR ERFASSUNG VON VERKEHRSLAGEDATEN**
METHOD FOR DETECTING TRAVEL INFORMATION
PROCEDE POUR SAISIR DES DONNEES CONCERNANT DES CONDITIONS DE CIRCULATION

(30) Priorität: 28.06.2000 DE 10032800
(43) Veröffentlichungstag der Anmeldung: 02.04.2003
(73) Patentinhaber: Vodafone Holding GmbH, 40213 Düsseldorf (DE)
(72) Erfinder: ALGER, Michael, 85540 Haar (DE)
(74) Vertreter: Meissner, Peter E.
(86) Internationale Anmeldenummer: PCT/DE2001/002275
(87) Internationale Veröffentlichungsnummer: WO 2002/001158

(56) Entgegenhaltungen:
- EP-A- 0 932 049
- EP-B- 0 927 411
- WO-A-01/01367
- US-A- 5 933 100

## Beschreibung

Die Erfindung betrifft ein Verfahren zur Erfassung von Verkehrslagedaten in einem Verkehrswegenetz, das von einem zellularen Mobilfunknetz mit einer Vielzahl von Basisstationen überdeckt ist und in dem sich eine Vielzahl von Fahrzeugen bewegt, die jeweils mit einem in Betrieb befindlichen mobilen Endgerät für das Mobilfunknetz, insbesondere einem Mobiltelefon, versehen sind, wobei Informationen über den Kontakt zwischen den Endgeräten und den Basisstationen zur Abschätzung des aktuellen Aufenthaltsorts von Endgeräten benutzt werden.

Es sind zahlreiche Verfahren zur Erfassung von Verkehrslagedaten bekannt, bei denen diese Daten durch Fahrzeuge, die im Sinne einer Stichprobenfahrzeugflotte am Straßenverkehr teilnehmen, aufgenommen und unter Angabe der aktuellen Fahrzeugposition an eine Zentrale mittels Mobilfunk weitergemeldet werden. Die an die Zentrale übermittelten Daten beinhalten üblicherweise Informationen zur Position des Fahrzeugs und dessen Geschwindigkeit. Die Bestimmung der aktuellen Fahrzeugposition erfolgt dabei im Fahrzeug selbst, indem beispielsweise ein Navigationssatellitensystem (z.B. GPS) benutzt wird. Da eine verlässliche Verkehrslageerfassung eine große Zahl von Fahrzeugen der Stichprobenfahrzeugflotte erfordert, ergibt sich ein erheblicher Aufwand für die Durchführung des Datenverkehrs zwischen den Fahrzeugen und der Zentrale. Zur Begrenzung dieses Aufwandes ist es beispielsweise aus der EP 0 715 285 B1 bekannt, den Fahrzeugen der Stichprobenfahrzeugflotte von der Zentrale aus Vorgaben dafür zu geben, unter welchen Bedingungen überhaupt eine Datenübertragung aus den Fahrzeugen zur Zentrale vorgenommen werden soll, so dass weitgehend eine Beschränkung des Datenverkehrs auf die Fälle von Störungen des Verkehrsflusses erfolgen kann. Dennoch bringt dieses Verfahren nicht nur eine beträchtliche Belastung der Kanäle des benutzten Mobilfunknetzes mit sich, sondern erfordert darüber hinaus auch eine spezielle Geräteausstattung in den einzelnen Fahrzeugen der Stichprobenfahrzeugflotte.

Aus der DE 198 36 178 A1 ist ein Verfahren bekannt zur Lokalisierung von Mobiltelefonen in einem Mobilfunknetz durch Triangulation aufgrund von Signallaufzeiten zwischen dem Mobiltelefon zu mehreren Basisstationen, in deren Sendebereich sich das Mobiltelefon aufhält. In sogenannten TDMA-Mobilfunksystemen wird die Laufzeit jeder Funkverbindung zwischen dem mobilen Endgerät und den Basisstationen des Mobilfunknetzes zum Zwecke der justierung der Endgeräte-Synchronisation, also der Phase des TDMA-Rahmens am Endgerät bestimmt. Da die Laufzeit des Signals repräsentativ ist für die Entfernung zwischen dem Endgerät und der jeweiligen Basisstation kann im Grundsatz eine sehr einfache Ortsbestimmung erfolgen, wenn die Entfernungen zu mehreren Basisstationen bekannt sind. Somit besteht eine Möglichkeit zur Bestimmung der aktuellen geogra-phischen Position des jeweiligen Endgeräts relativ zu den bekannten geographischen Positionen der Basisstationen. Die Ortung kann somit grundsätzlich auch ohne den Einsatz eines GPS-Systems erfolgen, allerdings ist die Genauigkeit wegen der begrenzten Auf-lösung (ca. 500 m) im Allgemeinen geringer. Insbesondere in Ballungsgebieten wäre auf-grund dieser begrenzten Genauigkeit keine eindeutige Zuordnung eines mobilen Endgeräts, das sich in einem Fahrzeug auf einer Straße befindet, zu dieser Straße möglich.

In der DE 198 36 089 A1 wird ein Verfahren zur Ermittlung dynamischer Verkehrsinformationen beschrieben, bei dem die in einem Verkehrswegenetz aufgestellten Basisstationen eines Mobilfunknetzes anhand der empfangenen Signalstärke den jeweiligen Abstand zu einem mobilen Endgerät schätzen und über die Änderung der Signalstärke auf Bewegungen des mobilen Endgeräts schließen. Die Auflösung dieses Verfahren ist vergleichsweise grob und daher insbesondere für Verkehrsnetze mit großer Verkehrswegedichte weniger geeignet. Vorteilhaft ist aber bei diesem Verfahren ebenfalls der Umstand, dass in den einzelnen Fahrzeugen keine speziellen Endgeräte verfügbar sein müssen, sondern die Anwesenheit beispielsweise eines in Betrieb befindlichen mobilen Telefons im Fahrzeug ausreicht.

Schließlich ist aus der EP 0 927 411 B1 ein Verfahren zur Erfassung von Verkehrslagedaten bekannt, bei dem der Fahrweg und die Geschwindigkeit eines Fahrzeuges mit Hilfe der Sequenz der Zellwechsel eines im Fahrzeug mitgeführten Mobilfunkgerätes sowie in Kenntnis der räumlichen Anordnung der Funkzellen ermittelt werden.

Aufgabe der vorliegenden Erfindung ist es, ein Verfahren der Eingangs genannten Art dahingehend weiterzubilden, dass es mit möglichst geringem Aufwand eine ausreichend zuverlässige Erfassung der Verkehrslage ermöglicht. Insbesondere soll der Einsatz spezieller Einrichtungen, die auf die Erfassung von Verkehrslagedaten gerichtet sind, in den die Verkehrswege benutzenden Fahrzeugen nicht erforderliche sein.

Gelöst wird diese Aufgabe durch ein Verfahren mit den im Patentanspruch 1 angegebenen Merkmalen, Vorteilhafte Weiterbildungen dieses Verfahrens ergeben sich aus den abhängigen Ansprüchen.

Die vorliegende Erfindung geht davon aus, dass ein Verkehrswegenetz von einem zellularen Mobilfunknetz mit einer Vielzahl von Basisstationen überdeckt ist, die jeweils eine eindeutige Kennung aufweisen. In diesem Verkehrswegenetz bewegt sich eine Vielzahl von Fahrzeugen, die jeweils mit einem in Betrieb befindlichen mobilen Endgerät für das Mobilfunknetz versehen sind (z.B. Mobiltelefon). Zur Gewährleistung der Betriebsfähigkeit der mobilen Endgeräte stehen diese je nach ihrem aktuellen Aufenthaltsort in Kontakt (Funkkontakt) mit einzelnen Basisstationen. Informationen über diese Kontakte werden zur Abschätzung des aktuellen Aufenthaltsorts (womit auch ein aktuell benutzter Streckenabschnitt gemeint sein kann) von Endgeräten benutzt. Hierzu sieht die Erfindung vor, dass zumindest für einen Teil des Verkehrswegenetzes, in dem die Basisstationen einen Sendebereich mit einem Zellenradius, der in der Größenordnung des Abstandes benachbarter, voneinander zu unterscheidender Verkehrswege liegt, aufweisen, charakteristische Muster im Sinne von Folgen der Kennungen derjenigen Basisstationen, mit denen jeweils ein Endgerät in Kontakt tritt, wenn es entlang eines Streckenverlaufs bewegt wird, ermittelt, dem jeweiligen Streckenverlauf zugeordnet und dauerhaft gespeichert werden. Auf diese Weise wird gleichsam die Geometrie des jeweiligen Streckenverlaufs abgebildet auf eine typische Folge von Basisstationskennungen.

Im Hinblick auf die Begriffe Sendebereich und Zellenradius ist anzumerken, dass es sich keineswegs immer um kreisförmige Sendebereiche handelt. Diese können auch vielfältige andersartige Formen aufweisen, etwa elliptische oder keulenförmige. Mit Zellenradius ist dann jeweils die größte charakteristische Querabmessung gemeint.

Um nun zu aktuellen Verkehrsinformationen zu kommen, sieht die Erfindung weiterhin vor, ausgewählte Endgeräte im jeweiligen Bereich des Verkehrswegenetzes im Einzelnen zu verfolgen, indem jeweils die aktuelle Folge der von einem Endgerät im Einzelnen kontaktierten Basisstationen ermittelt und mit den gespeicherten charakteristischen Mustern verglichen wird. Anhand dieses Vergleichs kann dann entschieden werden, in welchem Streckenverlauf sich das jeweilige Endgerät gerade aufhält. Die Frage der Richtung, in der sich das Endgerät entlang der identifizierten Strecke bewegt, kann anhand der Reihenfolge der Kennungen der Basisstationen leicht entschieden werden. Besonders vorteilhaft ist es, wenn in der aktuellen Folge der kontaktierten Basisstationen jeweils auch Informationen über den Zeitpunkt der Kontaktaufnahme des jeweiligen Endgeräts mit der jeweiligen Basisstation festgehalten und zur Ermittlung eines für die Bewegungsgeschwindigkeit des jeweiligen Endgeräts repräsentativen Wertes benutzt wird.

Grundsätzlich ist die Treffgenauigkeit, d.h. das Auflösungsvermögen des erfindungsgemäßen Verfahrens umso besser, je kleiner die einzelnen Zellenradien sind. Vorzugsweise wird ein Mobilfunknetz verwendet, das überwiegend Zellenradien von unter 1000 m, insbesondere unter 550 m aufweist. Die noch zulässige Größe der Zellenradien hängt stark von der Dichte der Verkehrswege im betrachteten Gebiet ab. Je höher die Dichte umso kleiner sollten die Zellenradien sein. In Gebieten mit großen Abständen zwischen den Verkehrswegen sind entsprechend große Zellenradien zulässig. In Untersuchungen des deutschen Autobahnnetzes konnte herausgefunden werden, dass für 60% dieses Verkehrswegenetzes sogar Zellenradien von bis zu 2 Km Größe noch zulässig wären für eine eindeutige Zuordbarkeit der Straßen. Bei Zellenradien unter 600 m wäre eine entsprechende Abdeckung von 95% des deutschen Autobahnnetzes möglich. Es versteht sich von selbst, dass die Zellenradien untereinander je nach den örtlichen Gegebenheiten der Verkehrswegedichte sich in ihrer Größe stark unterscheiden dürfen, ohne den Erfolg des erfindungsgemäßen Verfahrens zu gefährden.

Da mit zunehmender Verbreitung von Mobilfunkendgeräten in Fahrzeugen die Anzahl der in einer bestimmten Zone insgesamt registrierten Endgeräte recht gut mit der tatsächlichen Verkehrsdichte korreliert, lassen sich entsprechende Verkehrslagedaten leicht ermitteln. Anhand der Verfolgung einzelner Endgeräte lassen sich auf jeden Fall in einfachster Weise sehr gute Informationen über die Qualität des Verkehrsflusses auf einzelnen Straßenzügen des Verkehrswegenetzes gewinnen. Die Qualität der Daten ist verfahrenbedingt umso besser, je dichter das zellulare Mobilfunknetz gewebt ist, d.h. je kleiner die Zellenradien sind.

Die Genauigkeit der Ortsbestimmungsfunktion wird weiterhin dadurch gefördert, dass an einem Aufenthaltsort eines mobilen Endgeräts häufig gleichzeitiger Kontakt zu mehreren Basisstationen besteht. Insofern besteht die Folge der Basisstationskennungen vorteilhafter Weise nicht nur aus Einzelwerten, sondern vielfach auch entsprechend der Zahl der gleichzeitig kontaktierten Basisstationen aus Wertepaaren von zwei oder mehr Kennungen. Dies gilt selbstverständlich sowohl für die gebildeten charakteristischen Muster wie auch für die aktuell ermittelten Folgen für ein einzelnes Endgerät.

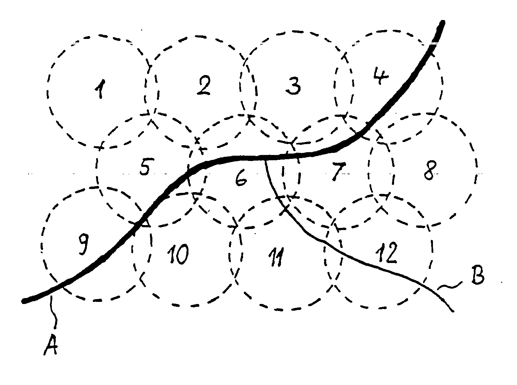

Nachfolgend wird die Erfindung anhand des in der einzigen Figur dargestellten schematischen Ausführungsbeispiels näher erläutert.

Die Zeichnung zeigt einen Ausschnitt aus einem zellularen Mobilfunknetz, dessen einzelne Zellen mit den Bezugszeichen 1 bis 12 bezeichnet sind. Die Zellen sind in idealisierter Weise als einfache Kreise wiedergegeben. Tatsächlich weichen die Sendebereiche einzelner Basisstationen jedoch vielfach aufgrund topographischer Einflüsse von der Kreisform ab. In den Ausschnitten des Mobilfunknetzes ist auch der Teil eines Verkehrswegenetzes eingezeichnet, der aus den beiden Straßenzügen einer Hauptstraße A und einer davon abzweigenden Nebenstraße B besteht. Wenn nun ein Fahrzeug, das mit einem in Betrieb befindlichen Mobilfunktelefon die Hauptstraße von links unten nach rechts oben durchfährt, ergibt sich bis zum Abzweig der Nebenstraße B die folgende Folge von Basisstationskennungen:
(9), (5, 9, 10), (5, 10), (5), (5, 6), (6)

Wenn das Fahrzeug die Abzweigung der Nebenstraße passiert hat ergeben sich die folgenden weiteren Wertepaare für die Basisstationskennungen:
(6, 7), (7,4), (4)

Wenn das Fahrzeug stattdessen aber an der Abzweigung der Nebenstraße B in die Nebenstraße B abbiegen würde, würde sich die folgende weitere Folge ergeben:
(6, 11), (11), (11, 12), (12)

Man erkennt hieran deutlich, dass der Weg, den ein einzelnes Endgerät zurücklegt, anhand der Basisstationskennungen recht zuverlässig verfolgt werden kann. Wenn man einzelnen voneinander beabstandeten Orten, denen jeweils ein Wertepaar zugeordnet ist, die jeweils tatsächlich zwischen ihnen liegenden geographischen Distanzen zuordnet und darüber hinaus die Zeitpunkte festhält, zu denen diese Wertepaare jeweils an dem beobachteten mobilen Endgerät festgestellt werden, lassen sich auf einfache Weise Werte ermitteln, die für die Geschwindigkeit der Bewegung des jeweiligen Endgeräts repräsentativ sind. Besonders eignen sich hierzu Wertepaare, die auf vergleichsweise kurzen Stücken des Verkehrswegenetzes festgestellt werden können, d.h. die im Grenzbereich von zwei oder mehr Einzelzellen liegen. Dies gilt beispielsweise für das aus drei Einzelwerten bestehende Wertepaar (5, 9, 10) und auch für die aus zwei Einzelwerten bestehenden Wertepaare.

Der besondere Vorteil der vorliegenden Erfindung liegt darin, dass eine vergleichsweise sehr genaue Beobachtung des Verkehrflusses ermöglicht wird, ohne dass es hierzu einer speziellen gerätetechnischen Infrastruktur in den Fahrzeugen, die ein Verkehrswegenetz benutzen, bedarf. Grundlage ist lediglich eine Auswertung der Basisstationskennungen, die vom jeweiligen Endgerät festgestellt werden, um den Kontakt zur jeweiligen Basisstation im Rahmen der Aufrechterhaltung der Mobilfunkfunktion zu halten.

## Patentansprüche

1. Verfahren zur Erfassung von Verkehrslagedaten in einem Verkehrswegenetz (A, B), das von einem zellularen Mobilfunknetz mit einer Vielzahl von eine eindeutige Kennung aufweisenden Basisstationen (1-12) überdeckt ist und in dem sich eine Vielzahl von Fahrzeugen bewegt, die jeweils mit einem in Betrieb befindlichen mobilen Endgerät für das Mobilfunknetz versehen sind, wobei Informationen über den Kontakt zwischen den Endgeräten und den Basisstationen zur Abschätzung des Aufenthaltsorts von Endgeräten benutzt werden,
**dadurch gekennzeichnet,**
**dass** zumindest für einen Teil des Verkehrswegenetzes, in dem die Basisstationen einen Sendebereich mit einem Zellenradius aufweisen, der in der Größenordnung des Abstandes benachbarter, voneinander zu unterscheidender Verkehrswege liegt, charakteristische Muster im Sinne von Folgen der Kennungen derjenigen Basisstationen, mit denen jeweils ein Endgerät in Kontakt tritt, wenn es entlang eines Streckenverlaufs bewegt wird, ermittelt, dem jeweiligen Streckenverlauf zugeordnet und dauerhaft gespeichert werden
und **dass** zur Gewinnung aktueller Verkehrslageinformationen für ausgewählte Endgeräte jeweils die aktuelle Folge der von diesem Endgerät kontaktierten Basisstationen ermittelt, mit den gespeicherten charakteristischen Mustern verglichen und zur Entscheidung benutzt wird, in welchem Teil des Streckenverlaufs sich das jeweilige Endgerät gerade aufhält.

2. Verfahren nach Anspruch 1,
**dadurch gekennzeichnet,**
**dass** es in einem Teil des Verkehrswegenetzes angewandt wird, in dem der Zellenradius im wesentlichen jeweils unter 1000 m, insbesondere unter 550 m liegt.

3. Verfahren nach einem der Ansprüche 1 oder 2,
**dadurch gekennzeichnet,**
**dass** in der aktuellen Folge der kontaktierten Basisstationen auch Informationen über den Zeitpunkt der Kontaktaufnahme des jeweiligen Endgeräts mit der jeweiligen Basisstation festgehalten und zur Ermittlung eines für die Bewegungsgeschwindigkeit des jeweiligen Endgeräts repräsentativen Wertes benutzt wird.

4. Verfahren nach einem der Ansprüche 1 bis 3,
**dadurch gekennzeichnet,**
**dass** die charakteristischen Muster und aktuellen Folgen der Basisstationskennungen für ein einzelnes Endgerät zumindest teilweise aus Wertepaaren von zwei oder mehr Basisstationen bestehen, mit denen das Endgerät an einem Aufenthaltsort in Kontakt ist

## Claims

1. Method for detecting traffic situation data in a highway network (A, B) which is covered by a cellular mobile radio network which has a multiplicity of base stations (1 - 12) having an unequivocal identification signal and in which a multiplicity of vehicles is moving, said vehicles being respectively provided with a mobile terminal, which is in operation, for the mobile radio network, information relating to the contact between the terminals and the base stations being used in order to estimate the location of the terminals,
**characterised in that**,
at least for a part of the highway network in which the base stations have a transmitting range with a cell radius which is of the order of magnitude of the distance of highways which are adjacent and to be differentiated from each other, characteristic patterns in the sense of sequences of identification signals of those base stations with which respectively a terminal makes contact when it is moved along the course of a route are determined, assigned to the respective course of a route and permanently stored,
and **in that**, in order to obtain current traffic situation information for selected terminals, the current sequence respectively of the base stations contacted by this terminal is determined, compared with the stored characteristic patterns and used in order to decide in which part of the course of a route the respective terminal is situated at that moment.

2. Method according to claim 1,
**characterised in that**
it is applied in a part of the highway network in which the cell radius is substantially respectively under 1000 m, in particular under 550 m.

3. Method according to one of the claims 1 or 2,
**characterised in that**,
in the current sequence of contacted base stations, also information relating to the point in time of making contact of the respective terminal with the respective base station is recorded and used in order to determine a value which is representative of the speed of movement of the respective terminal.

4. Method according to one of the claims 1 to 3,
**characterised in that**
the characteristic patterns and current sequences of the base station identification signals for an individual terminal comprise at least partially pairs of values of two or more base stations with which the terminal at one location is in contact.

## Revendications

1. Procédé destiné à recueillir des informations concernant la situation de la circulation dans un réseau routier (A, B), lequel est couvert par un réseau de radiotéléphonie mobile cellulaire (1-12) comportant une pluralité de stations de base ayant un indicatif univoque et dans lequel se déplacent un grand nombre de véhicules qui sont chacun pourvus d'un terminal mobile en service pour le réseau de radiotéléphonie mobile, les informations concernant le contact entre les terminaux et les stations de base étant utilisées pour localiser les terminaux,
**caractérisé en ce qu'**au moins pour une partie du réseau routier, dans laquelle les stations de base présentent une zone d'émission avec un rayon de cellule situé dans un ordre de grandeur correspondant à la distance entre des routes voisines à différencier les unes des autres, des échantillons caractéristiques au sens de suites des indicatifs des stations de base avec lesquelles un terminal entre en contact lorsqu'il se déplace le long d'un tracé routier sont déterminés, associés au tracé routier concerné et enregistrés durablement, et **en ce que**, pour acquérir des informations actuelles sur la situation de la circulation pour des terminaux choisis, la suite actuelle des stations de base contactées par le terminal donné est déterminée, comparée aux échantillons caractéristiques en mémoire et utilisée pour décider dans quelle partie du tracé routier se trouve actuellement le terminal en question.

2. Procédé selon la revendication 1,
**caractérisé en ce que** celui-ci est appliqué dans une partie du réseau routier où le rayon de cellule est essentiellement inférieur à 1000 m, en particulier inférieur à 550 m.

3. Procédé selon l'une des revendications 1 ou 2,
**caractérisé en ce que**, dans la suite actuelle des stations de base contactées, il est aussi enregistré des informations sur l'heure de la prise de contact du terminal concerné avec la station de base donnée, lesquelles sont utilisées pour déterminer une valeur représentative pour la vitesse de déplacement du terminal en question.

4. Procédé selon l'une des revendications 1 à 3,
**caractérisé en ce que** les échantillons caractéristiques et les suites actuelles des indicatifs de stations de base pour un terminal donné sont composés au moins en partie de couples de valeurs provenant de deux stations de base ou plus avec lesquelles le terminal est en contact à une localisation donnée.
